# EUROPÄISCHE PATENTANMELDUNG

(11) **EP 4 796 298 A1**
(43) Veröffentlichungstag der Anmeldung: **26.08.2026**
(21) Anmeldenummer: 25159966.8
(22) Anmeldetag: 25.02.2025
(51) Int. Cl.: B29C 65/18, B29C 65/00, B29L 31/00

(54) **VORRICHTUNG UND VERFAHREN ZUM HERSTELLEN VON SCHLAUCHBEUTELN**

(71) Anmelder: pely-tex GmbH & Co. KG, 23812 Wahlstedt (DE)
(72) Erfinder: Röttger, Henning, 24568 Kaltenkirchen (DE)
(74) Vertreter: Hauck Patent- und Rechtsanwälte PartmbB

(57) **Zusammenfassung**

Vorrichtung zum Herstellen von Schlauchbeuteln aus einer Flachmaterialbahn umfassend eine Formschulter, ein in die Formschulter eingesetztes Formrohr mit einer Siegelzone und eine Einrichtung zum Längssiegeln durch Erhitzen und Anpressen überlappender Randbereiche der von der Formschulter um das Formrohr herumgelegten Flachmaterialbahn gegen die Siegelzone des Formrohrs, wobei die Siegelzone des Formrohres eine Siegelfläche aus Stahl, gehärtetem Stahl, Keramik oder einem anderen abriebfesten Material aufweist und eine Einrichtung zum Auftragen eines Gleitmittels auf die Siegelfläche und/oder den der Siegelfläche zugewandten Randbereich der Flachmaterialbahn vorhanden ist.

## Beschreibung

Die Erfindung betrifft eine Vorrichtung und ein Verfahren zum Herstellen von Schlauchbeuteln.

Schlauchbeutel kommen insbesondere bei der Verpackung von Nahrungsmitteln, Gewürzen, Genussmitteln, Süßwaren, Stimulantien und Arzneimitteln zum Einsatz.

Schlauchbeutel werden aus einer Flachmaterialbahn gebildet, indem diese zunächst an den beiden seitlichen Rändern zurückgefaltet wird, sodass zwei Randbereiche einander überlappen. Die einander überlappenden Randbereiche werden in Längsrichtung durch eine Längssiegelnaht miteinander versiegelt. In den solchermaßen gebildeten Schlauch wird das zu verpackende Produkt hineingegeben. Vor und hinter dem Produkt werden senkrecht zur Längssiegelnaht verlaufende Quersiegelnähte in den Schlauch eingebracht, sodass eine Kette aus miteinander verbundenen Schlauchbeuteln entsteht. Innerhalb der Quersiegelnähte wird die Kette durchtrennt und in einzelne Schlauchbeutel zerlegt. Die Flachmaterialbahn kann insbesondere aus Papier, Kunststofffolie, Metallfolie oder Packstoffverbund bestehen.

Schlauchbeutel für den oralen Gebrauch (orale Beutel) bestehen aus einem flüssigkeitsdurchlässigen Flachmaterial, beispielsweise um Geschmacksstoffe oder Wirkstoffe aus einem Oraltabak oder Arzneimittel mit dem Speichel zu entnehmen.

Orale Beutel, z.B. für nikotinhaltige Pulver, werden aus Vliesstoffen gefertigt, die thermisch versiegelt werden. Die Vliesstoffe weisen eine für die Anwendung geeignete Porosität und Benetzbarkeit auf, die den Durchtritt von Speichel, Geschmacksstoffen und anderen Wirkstoffen wie z.B. Nikotin erlaubt und gleichzeitig den Austritt des pulverförmigen Beutelinhaltes verhindert. Die verwendeten Vliesstoffe haben thermoplastische Eigenschaften, so dass diese auf Schlauchbeutelanlagen thermisch bzw. mittels Ultraschall zu einem geschlossenen Beutel versiegelt werden können.

In einer Schlauchbeutelanlage wie sie beispielhaft von den Firmen Merz Verpackungsmaschinen GmbH bzw. G.D. S.p.A. angeboten werden, wird eine Bahn des Vliesstoffes über eine Formschulter umgelegt und zu einem Schlauch geformt, der außen an einem Füllrohr entlanggeführt wird. Die sich überlappenden Vliesseiten werden mittels einer thermischen Siegeleinheit entlang einer Längsversiegelung fest miteinander verschweißt. Dabei werden zwei Verfahren angewendet:
a.) Die Vliesseiten überlappen sich so, dass sich die beiden Innenseiten des Vlieses berühren, so dass diese unter Ausformung einer Siegelflosse miteinander fest verbunden, die anschließend umgelegt wird.
b.) Die Vliesseiten überlappen so, dass sich eine Außen- und eine Innenseite berühren und mittels eines Siegelwerkzeuges, dass von außen drückt, gegen das Füllrohr miteinander versiegelt (vgl. DE 20 2005 006 068 U1).

Bei beiden Verfahren wird der gebildete Vliesschlauch anschließend durch Aufbringung einer Querversiegelung, die thermisch bzw. mittels Ultraschalles erfolgen kann, zu einem Beutel verschlossen. Dabei wird, nachdem die erste Quersiegelnaht ausgebildet wurde, das Füllpulver durch das Füllrohr in den Schlauch eingetragen, bevor dieser anschließend durch Aufbringen einer zweiten Quersiegelnaht zu einem Beutel verschlossen wird.

Für orale Anwendungen werden bevorzugt möglichst dünne und wenig steife Beutel geformt. Daher ist das Verfahren b) ohne Ausbildung einer Siegelflosse vorteilhaft, da hier im Bereich der Längssiegelnaht nur zwei Lagen Vlies miteinander verbunden werden, während beim Verfahren a) nach dem Umklappen der Siegelflosse drei Lagen Vlies im Bereich der Längssiegelnaht übereinander liegen.

Beim Verfahren b) ohne Ausbildung einer Siegelflosse werden die beiden Vlieslagen mittels eines Siegelwerkzeuges (in der Regel ein erhitztes Siegelrad) gegen das Füllrohr, das sich zum Zeitpunkt des Versiegelns innerhalb des Vliesschlauches befindet, thermisch versiegelt. Während beim Anpressen des Siegelrades auf der Außenseite des gebildeten Vliesschlauches durch die Drehung des Siegelrades praktisch keine Geschwindigkeitsdifferenz zwischen der Oberfläche des Siegelrades und des Vliesstoffes auftritt, gleitet der durch das Siegelrad gegen das Füllrohr gepresste Vliesstoff entlang der starren Oberfläche des Füllrohres, wodurch Reibungskräfte auf die Vliesoberfläche wirken und die Vliesstruktur beschädigt werden kann. Um diese Reibung an der Innenoberfläche des Vliesschlauches zu minimieren, wird im Siegelbereich ein Teflonstreifen aufgeklebt gegen den der Vliesschlauch beim Versiegeln durch das Siegelrad gepresst wird. Teflon bietet den Vorteil einer sehr geringen Oberflächenreibung und für den Siegelprozess ausreichenden Temperaturbeständigkeit. Vorteilhaft ist auch eine gewisse Duktilität des Teflons durch die sich der Teflonstreifen an die Form des Siegelrades anpasst und die Konstanz des Siegeldrucks über die Breite der Siegelnaht verbessert.

Problematisch ist ein gewisser Abrieb des Teflons unter den Siegelbedingungen (Temperatur und Druck). Bei typischen Siegeltemperaturen im Bereich von 200 °C bis 350 °C müssen die Teflon-Siegelstreifen in der Regel nach 30 min bis 60 min ausgetauscht werden. Neben dem Verlust an Anlagenkapazität durch den erforderlichen Wechsel des Teflonstreifens besteht die Problematik, dass der Teflon-Abrieb im Inneren des geformten Vliesbeutels freigesetzt wird und potentiell bei oraler Anwendung des Beutels vom Anwender aufgenommen werden kann.

Der Verschleiß führt zu Ausfällen und Maschinenstillstandszeiten und verringert die Produktionsleistung.

Die vorstehenden Probleme treten auch bei Schlauchbeuteln auf, die für andere Anwendungen als für den oralen Gebrauch bestimmt sind.

Davon ausgehend liegt der Erfindung die Aufgabe zugrunde, eine Vorrichtung und ein Verfahren zum Herstellen von Schlauchbeuteln zu schaffen, die bzw. das weniger Ausfälle und Maschinenstillstandszeiten aufweist und die Freisetzung von Abrieb im Inneren des Beutels vermeidet.

Die Aufgabe wird erfindungsgemäß durch eine Vorrichtung zum Herstellen von Schlauchbeuteln gemäß Anspruch 1 gelöst. Vorteilhafte Ausführungsarten der erfindungsgemäßen Vorrichtung sind in Unteransprüchen und in der nachfolgenden Beschreibung angegeben.

Die erfindungsgemäße Vorrichtung zum Herstellen von Schlauchbeuteln aus einer Flachmaterialbahn umfasst eine Formschulter, ein in die Formschulter eingesetztes Formrohr mit einer Siegelzone und eine Einrichtung zum Längssiegeln durch Erhitzen und Anpressen überlappender Randbereiche der von der Formschulter um das Formrohr herumgelegten Vliesstoffbahn gegen die Siegelzone des Formrohres, dadurch gekennzeichnet, dass die Siegelzone des Formrohres eine Siegelfläche aus Stahl, gehärtetem Stahl, Keramik oder einem anderen abriebfesten Material aufweist und eine Einrichtung zum Auftragen eines Gleitmittels auf die Siegelfläche und/oder auf den der Siegelfläche zugewandten Randbereich der Flachmaterialbahn vorhanden ist.

Um bei der Herstellung eines Vliesschlauches ohne Siegelflosse (Verfahren b) ), den Abrieb des Teflonstreifens (oder eines anderen Kunststoffes mit geringer Oberflächenreibung und geeigneter Duktilität) zu vermeiden aber die Reibung zwischen Füllrohr und Vlies zu minimieren und eine weitgehend parallele Ausrichtung von Siegelfläche und Siegelrad sicherzustellen, ist eine abriebfeste Siegelfläche, vorzugsweise mit möglichst geringer Oberflächenreibung, (z.B. Stahl, gehärteter Stahl oder Keramik) in der Siegelzone des Füllrohres angeordnet. Auf die Siegelfläche und/oder auf den der Siegelfläche zugewandten Randbereich der Flachmaterialbahn wird ein geeignetes Gleitmittel aufgegeben, das für die jeweilige Anwendung des Schlauchbeutels geeignet ist. Bei Oraltabak-Beuteln kann vorteilhaft Glycerin als Gleitmittel verwendet werden, das in Nikotinpulver-Mischungen verwendet wird. Dabei wird das Gleitmittel bevorzugt nur auf der Seite des zu versiegelnden Materials zonal aufgebracht, die in direktem Kontakt mit der Siegelzone des Füllrohrs steht. Die der Siegelzone abgewandte Seite des Vliesstoffes wird möglichst nicht mit dem Gleitmittel beauftragt, da dies die Festigkeit der Siegelnaht reduzieren könnte.

Die abriebfeste Siegelfläche kann durch Oberflächenbehandlung (z.B. Härten, Laserbehandlung, Bedampfung) der Oberfläche des Füllrohres erzeugt werden, auf der Oberfläche des Füllrohres angebracht oder in das Füllrohr eingearbeitet werden. Das Gleitmittel wird mittels einer Einrichtung zum Auftragen eines Gleitmittels auf zumindest einen der beiden überlappenden Randbereiche der Flachmaterialbahn und/oder auf die Siegelfläche aufgebracht. Hierfür ist die Einrichtung zum Auftragen des Gleitmittels in Durchlaufrichtung der Materialbahn vor der Siegelzone oder auf Höhe der Siegelzone angeordnet. Insgesamt wird durch die abriebfeste Segelfläche und den Auftrag des Gleitmittels der Abrieb infolge des Anpressens der Randbereiche mittels des Siegelwerkzeugs gegen die Siegelzonen verringert, so dass auf die Verwendung von abrasiven Materialien wie Teflon im Bereich der Siegelzone verzichtet werden kann. Hierdurch werden Ausfallzeiten und Stillstandszeiten der Vorrichtung herabgesetzt, Kosten eingespart und die Produktionsleistung erhöht. Weiterhin wird die Freisetzung von Abrieb der Siegelzone, der in den Innenraum des geformten Schlauchbeutels gelangt, deutlich reduziert oder sogar ganz verhindert.

Gemäß einer Ausführungsart der Erfindung ist die Siegelfläche die Außenseite einer Folie, einer Platte oder einer Schale aus einem abriebfesten Material, die auf das Formrohr aufgebracht (z.B. aufgeklebt) ist. Die Folie ist beispielsweise auf dem Mantel (Außenoberfläche) des Formrohres aufgebracht und daran fixiert. Beispielsweise handelt es sich bei der Folie um eine Metallfolie. Wenn die Folie auf einen kreiszylindrischen Mantel des Formrohres aufgebracht wird, ist grundsätzlich nur eine sehr schmale Siegelnaht möglich, da das Siegelrad nur eine schmale Auflagefläche hat. Aus diesem Grund kann eine Platte auf das Formrohr aufgeklebt bzw. in eine Abflachung oder Aussparung im Mantel des Formrohrs eingeklebt werden. Hierbei handelt es sich beispielsweise um eine Platte aus Metall oder aus Keramik. Vorzugsweise weist die Platte eine in Längsrichtung verlaufende Vertiefung auf, in die das Siegelrad eintauchen kann, sodass die Kontaktzeit beim Siegelvorgang verlängert werden kann. Die Schale weist vorzugsweise denselben Radius wie das Formrohr in dem Bereich auf, auf den die Schale aufgesetzt ist, z.B. im Bereich einer in Umfangsrichtung verlaufenden Vertiefung. Vorzugsweise weist die Schale eine in Längsrichtung verlaufende Vertiefung auf, in die das Siegelrad eintauchen kann, sodass die Kontaktzeit beim Siegelvorgang verlängert werden kann. Die Schale besteht beispielsweise aus Metall oder aus Keramik.

Gemäß einer weiteren Ausführungsart besteht die Siegelfläche aus einem elastisch oder plastisch verformbaren (duktilen) Material oder ist die Siegelfläche auf der Außenseite einer Lage aus einem elastisch oder plastisch verformbaren Material angeordnet. Das elastisch oder plastisch verformbare Material ist beispielsweise ein Metall, ein Kunststoff, ein Elastomer oder ein thermoplastisches Elastomer.

Gemäß einer weiteren Ausführungsart ist das verformbare Material ein flexibles Flächengebilde. Gemäß einer weiteren Ausführungsart ist auf die Außenseite des flexiblen Flächengebildes eine Folie, eine Platte oder eine Schale aus einem abriebfesten Material aufgebracht, deren Außenseite die Siegelfläche bildet.

Gemäß einer weiteren Ausführungsart ist die Siegelfläche und/oder das verformbare Material in eine Aussparung oder Vertiefung im Mantel des Formrohres eingesetzt. Gemäß einer weiteren Ausführungsart ist die Siegelfläche und/oder das verformbare Material so in eine Aussparung oder Vertiefung im Mantel des Formrohres eingesetzt, dass die Siegelfläche bündig mit der Mantelfläche des Formrohres neben der Aussparung oder Vertiefung abschließt.

Gemäß einer weiteren Ausführungsart ist die Einrichtung zum Auftragen des Gleitmittels ausgebildet, das Gleitmittel auf den innen angeordneten Randbereich der überlappenden Randbereiche der Flachmaterialbahn aufzubringen. Hierdurch wird das Gleitmittel gezielt auf den Randbereich der Flachmaterialbahn aufgebracht, der beim Längssiegeln gegen das Formrohr gepresst wird, wodurch der Gleitmitteleinsatz geringgehalten werden kann. Grundsätzlich kann das Gleitmittel auch auf den außen angeordneten Randbereich der überlappenden Randbereiche aufgebracht werden, wenn die Flachmaterialbahn aus Vliesstoff oder einem anderen für das Gleitmittel durchlässigen Material besteht. Allerdings kann hierdurch die Siegelfestigkeit verringert werden.

Gemäß einer weiteren Ausführungsart ist die Einrichtung zum Auftragen des Gleitmittels ausgebildet, das Gleitmittel auf die Innenseite des Randbereichs der Flachmaterialbahn aufzubringen, die in direkten Kontakt mit der Siegelfläche kommt. Damit wird vermieden, dass das Gleitmittel mit der Siegelfläche abgewandten Oberfläche der Flachmaterialbahn, die gegen die andere Lage der Flachmaterialbahn gesiegelt wird, in Kontakt kommt und ggf. die Siegelfestigkeit negativ beeinflusst. Hierdurch kann auch der Gleitmitteleinsatz geringgehalten werden.

Gemäß einer weiteren Ausführungsart ist die Einrichtung zum Auftragen des Gleitmittels ausgebildet, das Gleitmittel direkt auf mindestens einen der überlappenden Randbereiche der Flachmaterialbahn und/oder direkt auf die Siegelfläche aufzubringen. Hierbei wird das Gleitmittel gezielt auf die Siegelfläche und/oder auf den Randbereich der Flachmaterialbahn aufgebracht, in dem die Versiegelung durchgeführt wird. Hierdurch kann der Gleitmitteleinsatz geringgehalten werden.

Gemäß einer weiteren Ausführungsart ist die Einrichtung zum Auftragen des Gleitmittels ausgebildet, das Gleitmittel auf die Formschulter, das Formrohr und/oder die Siegelfläche in einem Bereich aufzubringen, über den hinweg die Flachmaterialbahn mit einem Randbereich verlagert wird. Hierdurch kann das Gleitmittel indirekt auf mindestens einen Randbereich der Flachmaterialbahn und/oder die Siegelfläche aufgebracht werden, der Gleitmitteleinsatz geringgehalten und ein Eindringen des Gleitmittels in den unmittelbaren Siegelbereich verhindert werden.

Gemäß einer weiteren Ausführungsart wird das Gleitmittelmittel mittels eines Filzes oder eines anderen Materials mit Kapillarwirkung auf die jeweilige Auftragsfläche aufgebracht und/oder wird das Gleitmittel mittels eines Abstreifers auf die jeweilige Auftragsfläche aufgebracht und/oder wird das Gleitmittel mittels eines Sprühkopfes auf die jeweilige Auftragsfläche aufgebracht. Durch die angegeben Auftragsweisen kann das Gleitmittel zielgenau und unter geringem Materialeinsatz auf die Bereiche aufgebracht werden, in denen beim Längssiegeln eine besonders hohe Reibung entstehen kann.

Gemäß einer weiteren Ausführungsart umfasst die Einrichtung zum Längssiegeln ein Siegelrad, das eine zum Formrohr senkrechte Drehachse aufweist und auf der Siegelfläche abrollbar ist. Durch Verwendung eines Siegelrades kann die Reibung in der Siegelzone geringgehalten werden.

Gemäß einer weiteren Ausführungsart ist die Kontaktfläche der Siegelfläche komplementär zum Profil des Siegelrades geformt. Hierdurch kann die Kontaktzeit des Siegelrades zum zu versiegelnden Flachmaterial verlängert werden und insbesondere die Breite der Siegelnaht bestimmt werden. Bei einem Oraltabakbeutel hat die Längssiegelnaht bevorzugt eine Breite im Bereich von 1 bis 10 mm, vorzugsweise von 5 mm.

Gemäß einer weiteren Ausführungsart weist die Einrichtung zum Längssiegeln eine Einrichtung zum Anpressen der überlappenden Randbereiche der Flachmaterialbahn gegen die Siegelzone des Formrohres auf, die zugleich eine Einrichtung zum Erhitzen der überlappenden Randbereiche ist. Hierbei ist vorzugsweise die Einrichtung zum Längssiegeln ein beheiztes Siegelrad. Gemäß einer anderen Ausführungsart weist die Einrichtung zum Längssiegeln eine Einrichtung zum Anpressen überlappender Randbereiche der Flachmaterialbahn gegen die Siegelzone und eine davon getrennte Einrichtung zum Erhitzen überlappender Randbereiche der Flachmaterialbahn auf. Beispielsweise ist die Einrichtung zum Anpressen ein Siegelrad und die Einrichtung zum Erhitzen der überlappenden Randbereiche eine Einrichtung zum Beheizen des Formrohres.

Gemäß einer weiteren Ausführung umfasst die Vorrichtung einen Vorrat einer Flachmaterialbahn. Bei dem Vorrat handelt es sich bei beispielsweise um eine Rolle, auf die eine Flachmaterialbahn aufgewickelt ist, wobei die Rolle vorzugsweise abrollbar in einem Rollenhalter oder Rollenwechsler gelagert ist. Gemäß einer weiteren Ausführungsart, die insbesondere für die Herstellung von oralen Beuteln bestimmt ist, ist die Flachmaterialbahn eine Bahn aus einem Vliesstoff.

Gemäß einer weiteren Ausführungsart ist die Flachmaterialbahn eine Bahn aus einem Vliesstoff, der auf der Außenseite eine geringere Hydrophilie als auf der Innenseite aufweist und mit der Innenseite am Formrohr anliegt. Um zu verhindern, dass das aufgetragene Gleitmittel (z. B. Glycerin) den thermischen Versiegelungsprozess stört, ist es vorteilhaft, einen Vliesstoff für die Flachmaterialbahn zu verwenden, der unterschiedliche Oberflächen hat. Die der Siegelfläche zugewandte Oberfläche, die das Gleitmittel aufnehmen soll, ist bevorzugt affin zum Gleitmittel, also in der Regel hydrophil, während die von der Siegelfläche abgewandte Seite (die Seite, die in der späteren Anwendung direkt im Mundkontakt ist) eine geringere Hydrophilie aufweist. Hierfür ist gemäß einer weiteren Ausführungsart die Flachmaterialbahn eine Bahn aus einem Vliesstoff, der auf der Außenseite eine geringere Hydrophilie als auf der Innenseite aufweist und mit der Innenseite am Formrohr anliegt.

Um die Randbereiche möglichst gut miteinander zu verbinden, ist es von Vorteil, wenn die von der Siegelfläche abgewandte Seite des Vliesstoffes gut thermisch siegelfähig ist. Hierfür weist gemäß einer weiteren Ausführungsart die Bahn aus einem Vliesstoff auf der Innenseite eine Lage aus einem chemisch verfestigten Vliesstoff auf, der einen Anteil Viskosefasern und thermoplastische Fasern enthält, und auf der Außenseite eine Lage aus einem Spinnvlies oder Krempelvlies, das thermoplastische Fasern enthält. Gemäß einer weiteren Ausführungsart weist die Bahn aus einem Vliesstoff auf der Außenseite eine Lage aus einem Spinnvlies oder Krempelvlies mit hydrophilem Finish auf. Ein solcher Vliesstoff kann z.B. ein Laminat sein, das beim Schneideprozess bei der Herstellung von Vliesstoffrollen hergestellt werden kann. Ein Beispiel ist ein chemisch verfestigtes Vlies, das einen Anteil an Viskosefasern enthält (z. B. das von der Firma Pelytex unter der Bezeichnung "NW 29 viv" kommerzialisierte Vlies), das der Siegelfläche zugewandt ist und mit dem Gleitmittel beaufschlagt wird. Auf der anderen Seite kann ein 12 g/m² PP Spinnvlies mit hydrophilem Finish aufgetragen sein. Hier ist es vorteilhaft, wenn das chemisch verfestigte Vlies neben einem thermoplastischen Binder auch thermoplastische Fasern enthält, sodass die Verbindung der beiden Lagen mittels eines Kalanders erfolgen kann. Alternativ kann das Spinnvlies auch als "Träger" mit in den Prozess zur Herstellung eines chemisch verfestigten Krempelvlieses einlaufen.

Auch für den effizienten Transport von Speichel und Geschmacksstoffen ist es vorteilhaft, dass die Hydrophilie des Vliesstoffes von der Außenseite des oralen Beutels (dies ist die von der Siegelzone abgewandte Seite des Vliesstoffes) geringer ist als die Hydrophilie der dem Beutelinnern und dem Prozess der Siegelfläche zugewandten Seite des Vliesstoffes. Hierdurch ergibt sich eine von außen nach innen zunehmende Kapillarkraft, die Speichel von außen in den oralen Beuteln hineintransportiert.

Gemäß einer weiteren Ausführungsart umfasst die Vorrichtung einen Vorrat eines Gleitmittels, wobei der Vorrat beispielsweise ein Tank ist.

Gemäß einer weiteren Ausführungsart ist das Gleitmittel Glycerin oder ein anderes für den oralen Gebrauch geeignetes Gleitmittel. Das Gleitmittel ist insbesondere für die Herstellung von oralen Beuteln geeignet. Bei dem Glycerin kann es sich insbesondere um chemisches Glycerin in reiner Form oder um pharmazeutisch reines Glycerin handeln.

Die Aufgabe wird erfindungsgemäß durch ein Verfahren zum Herstellen von Schlauchbeuteln gemäß Anspruch 22 gelöst. Vorteilhafte Ausführungsarten des erfindungsgemäßen Verfahrens sind in Unteransprüchen und in der nachfolgenden Beschreibung angegeben.

Die vorstehenden Angaben zu den Wirkungen und Vorteilen der erfindungsgemäßen Vorrichtung gelten mit den entsprechenden Anpassungen auch für das erfindungsgemäße Verfahren.

Insbesondere die folgenden Ausführungsarten der erfindungsgemäßen Vorrichtung und des erfindungsgemäßen Verfahrens sind einzeln oder in beliebiger Kombination möglich:
- Der Auftrag des Gleitmittels erfolgt auf die Seite des Vliesstoffes, der über das Füllrohr reibt. Dies kann z.B. über einen Abstreifer unmittelbar vor der Formschulter erfolgen. Dadurch ist es möglich sehr geringe Mengen des Gleitmittels exakt an der Stelle aufzutragen, an der die Siegelnaht gebildet wird, so dass die Ausbildung der Siegelnaht möglichst wenig durch das Gleitmittel beeinträchtigt wird.
- Das Gleitmittel kann auch auf die Oberfläche der Siegelvorrichtung, z.B. an der Formschulter, aufgetragen und dort vom Vliesstoff mitgenommen werden.
- Um eine vergrößerte Kontaktfläche in der Siegelzone zu erreichen, kann die Kontaktfläche entsprechend der Form des Siegelrades geformt sein, so dass das Siegelrad den Vliesschlauch in eine passende Mulde presst.
- Da es schwierig ist die Siegelzone exakt parallel zum Siegelrad auszurichten, kann es vorteilhaft sein zwischen dem Füllrohr und der aufgebrachten Siegelfläche ein plastisch verformbares (duktiles) bzw. elastisches Material anzubringen, so dass sich die Siegelfläche unter dem Siegeldruck an die Lage des Siegelrades anpasst und der Siegeldruck über die Breite der Siegelnaht weitgehend konstant ist. Sofern die mechanische Stabilität des zu versiegelnden Materials hinreichend ist, kann es ausreichend sein bei dieser Konstruktion eine Siegelfläche mit geringer Oberflächenreibung zu verwenden und auf den Auftrag eines Gleitmittels zu verzichten. Dies kann vorteilhaft für die Festigkeit der ausgebildeten Siegelnaht sein.

Die Erfindung wird nachfolgend anhand der anliegenden Zeichnungen eines Ausführungsbeispiels näher erläutert. In den Zeichnungen zeigen:
- Fig. 1: einen oralen Beutel in der Vorderansicht;
- Fig. 2: den oralen Beutel in der Rückansicht;
- Fig. 3: eine Vorrichtung zum Herstellen von Schlauchbeuteln in einer grob schematischen Perspektivansicht.

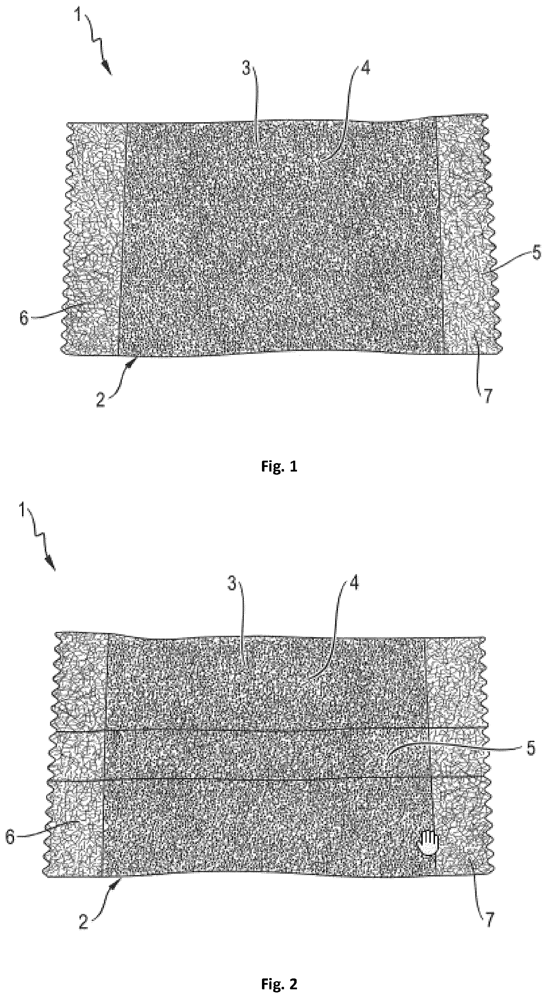

Gemäß Fig. 1 und 2 umfasst ein oralen Beutel 1 einen Beutel 2 aus einem Vliesstoff 3, in dem kleine Mengen aus Tabakmaterial und/oder ein anderes nikotinhaltiges Material und/oder ein Material mit einem anderen Wirkstoff angeordnet ist. Bei dem Tabakmaterial 4 handelt es sich beispielsweise um Snus. Der Vliesstoff 3 ist aus Viskosefasern und aus Bikomponentenfasern mit einer Polyethylen- und einer Polyester-Komponente hergestellt.

Der Beutel 2 ist als Schlauchbeutel ausgebildet. Ein Streifen aus dem Vliesstoff 3 ist an den Längsseiten übereinandergeschlagen und die Längsränder sind durch eine durch Heißsiegeln hergestellte Längssiegelnaht 5 miteinander verbunden. Ferner sind die beiden Querränder des Beutels 2 durch Quersiegelnähte 6, 7 miteinander verbunden, die durch Heißsiegeln oder durch Ultraschallsiegeln hergestellt sind.

Bei der Anwendung der oralen Beutel 1 hinter der Unterlippe und der Oberlippe platziert. Speichel aus der Mundhöhle dringt ein und löst Nikotin und andere Geschmacksstoffe aus dem Tabakmaterial 4 heraus, die über den Speichel an die Mundschleimhaut gelangen.

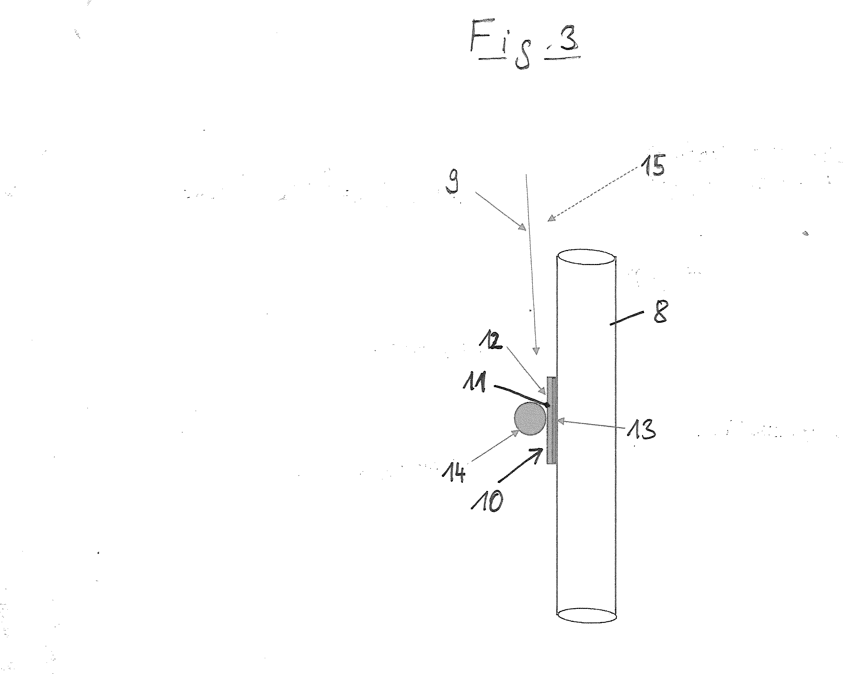

Gemäß Fig. 3 wird zur Herstellung des Beutels 2 ein Formrohr 8 verwendet. Eine Flachmaterialbahn 9 aus einem Vliesstoff wird über eine Formschulter (=Formatschulter gemäß DE 20 2005 096 068 U1) um das Formrohr 8 herumgelegt, sodass die Randbereiche der Flachmaterialbahn einander auf einer Seite des Formrohres 8 überdecken.

Auf der Seite des Formrohres 8, über das die einander überdeckenden Randbereiche wegverlagert werden, befindet sich eine Siegelzone 10. Im Bereich der Siegelzone 10 ist auf der Außenseite des Formrohres eine Siegelfläche 11 angeordnet, die im Beispiel eine Platte 12 aus Stahl, gehärtetem Stahl oder Keramik ist. Die Platte 12 weist die Siegelfläche 11 auf ihrer Außenseite auf.

Die Platte 12 ist auf der Außenseite einer elastischen oder duktilen Zwischenlage 13 befestigt, die an der Innenseite auf dem Mantel des Formrohrs 8 befestigt ist. Die elastische oder duktile Zwischenlage 13 ist beispielsweise aus einem Elastomer, duktilen oder elastischen Kunststoff hergestellt.

Der Vliesstoffschlauch mit den überlappenden Randbereichen wird zwischen einem drehbar um eine senkrecht zur Bildebene gerichtete Achse gelagerten, beheizten Siegelrad 14 und der Siegelfläche 11 hindurchtransportiert. Das Siegelrad 14 wird mit dem Umfang gegen die Außenseite der Siegelfläche 11 gepresst. Infolgedessen rollt das Siegelrad 14 auf den überlappenden Randbereichen der Flachmaterialbahn 9 ab und verschweißt diese entlang der Längssiegelnaht 5 miteinander.

Durch das Formrohr (Füllrohr) 8 hindurch wird Tabakmaterial oder ein anderes Substrat wie z.B. ein Nikotin-haltiges Pulver oder ein anderer Wirkstoff (Füllmaterial) in den Vliesstoffschlauch hineingeführt. Der Vliesstoffschlauch ist unterhalb von Portionen des Tabakmaterials bzw. eines anderen Füllmaterials mit Quersiegelnähten 6, 7 versehen. Vorzugsweise werden jeweils zwei parallele Quersiegelnähte eingebracht, sodass zwischen zwei benachbarten Quersiegelnähten einzelne Beutel 2 der Beutelkette abgetrennt werden können. Alternativ ist die Quersiegelnaht breit genug ausgeführt, sodass durch die Quersiegelnaht 6, 7 hindurch Beutel 2 abgeschnitten werden können.

Zusätzlich zu der Flachmaterialbahn 9 wird in Richtung des Pfeiles ein Gleitmittel 15 auf die Randbereiche der der Siegelfläche zugewandten Oberfläche der Flachmaterialbahn 9 und/oder auf die Siegelfläche 11 zugeführt, um die Reibung zwischen Flachmaterialbahn 9 und Siegelfläche 11 zu verringern.

Durch die elastische oder duktile Zwischenlage 13 wird erreicht, dass sich die Siegelfläche 11 an das Siegelrad 14 anpasst und eine gleichmäßig breite und feste Längssiegelnaht 5 erzeugt wird.

## Patentansprüche

1. Vorrichtung zum Herstellen von Schlauchbeuteln aus einer Flachmaterialbahn umfassend eine Formschulter, ein in die Formschulter eingesetztes Formrohr mit einer Siegelzone und eine Einrichtung zum Längssiegeln durch Erhitzen und Anpressen überlappender Randbereiche der von der Formschulter um das Formrohr herumgelegten Flachmaterialbahn gegen die Siegelzone des Formrohrs, **dadurch gekennzeichnet, dass** die Siegelzone des Formrohres eine Siegelfläche aus Stahl, gehärtetem Stahl, Keramik oder einem anderen abriebfesten Material aufweist und eine Einrichtung zum Auftragen eines Gleitmittels auf die Siegelfläche und/oder den der Siegelfläche zugewandten Randbereich der Flachmaterialbahn vorhanden ist.

2. Vorrichtung nach Anspruch 1, bei der die Siegelfläche die Außenseite einer Folie, einer Platte oder einer Schale aus einem abriebfesten Material ist.

3. Vorrichtung nach Anspruch 1 oder 2, bei der die Siegelfläche aus einem elastisch oder plastisch verformbaren Material besteht oder bei der die Siegelfläche auf der Außenseite einer Lage aus einem elastisch oder plastisch verformbaren Material angeordnet ist.

4. Vorrichtung nach Anspruch 3, bei der das verformbare Material ein Elastomer ist und/oder
das verformbare Material ein flexibles Flächengebilde ist.

5. Vorrichtung nach einem der Ansprüche 1 bis 4, bei der die Siegelfläche und/oder das verformbare Material in eine Vertiefung am Außenumfang des Formrohres eingesetzt ist.

6. Vorrichtung nach einem der Ansprüche 1 bis 5, bei der die Einrichtung zum Auftragen des Gleitmittels in einer oder mehreren der nachfolgenden Weisen ausgebildet ist:
• die Einrichtung zum Auftragen des Gleitmittels ist ausgebildet, das Gleitmittel auf den innen angeordneten Randbereich der überlappenden Randbereiche der Flachmaterialbahn aufzubringen,
• die Einrichtung zum Auftragen des Gleitmittels ist ausgebildet, das Gleitmittel auf der Innenseite des Randbereichs der Flachmaterialbahn aufzubringen, die in direkten Kontakt mit der Siegelfläche kommt,
• die Einrichtung zum Auftragen des Gleitmittels ist ausgebildet, das Gleitmittel direkt auf mindestens einen Randbereich der Flachmaterialbahn aufzubringen,
• die Einrichtung zum Auftragen des Gleitmittels ist ausgebildet, das Gleitmittel auf die Formschulter, das Formrohr und/oder die Siegelfläche in einem Bereich aufzubringen, über den die Flachmaterialbahn mit einem Randbereich hinweg verlagert wird,
• die Einrichtung zum Auftragen des Gleitmittels ist ausgebildet, das Gleitmittel mittels eines Filzes oder eines anderen Materials mit Kapillarwirkung auf die jeweilige Auftragsfläche aufzubringen und/oder das Gleitmittel mittels eines Abstreifers auf die jeweilige Auftragsfläche aufzubringen und/oder das Gleitmittel mittels eines Sprühkopfes auf die jeweilige Auftragsfläche aufzubringen.

7. Vorrichtung nach einem der Ansprüche 1 bis 6, bei der die Einrichtung zum Längssiegeln ein Siegelrad umfasst, das eine zum Formrohr senkrechte Drehachse aufweist und auf der Siegelfläche abrollbar ist,
wobei vorzugsweise die Kontaktfläche der Siegelfläche komplementär zum Profil des Siegelrades geformt ist und/oder
die Einrichtung zum Längssiegeln ein beheiztes Siegelrad ist.

8. Vorrichtung nach einem der Ansprüche 1 bis 7, die einen Vorrat einer Flachmaterialbahn umfasst.

9. Vorrichtung nach einem der Ansprüche 1 bis 8, bei der die Flachmaterialbahn in einer oder mehreren der nachfolgenden Weisen ausgebildet ist:
• die Flachmaterialbahn ist eine Bahn aus einem Vliesstoff,
• die Flachmaterialbahn ist eine Bahn aus einem Vliesstoff, der auf der Außenseite eine geringere Hydrophilie als auf der Innenseite aufweist und mit der Innenseite am Formrohr anliegt,
• die Flachmaterialbahn ist eine Bahn aus einem Vliesstoff, der auf der Innenseite eine Lage aus einem chemisch verfestigten Vliesstoff aufweist, der einen Anteil Viskosefasern und thermoplastische Fasern enthält, und der auf der Außenseite eine Lage aus einem Vlies aufweist, das thermoplastische Fasern enthält,
• die Flachmaterialbahn ist eine Bahn aus einem Vliesstoff, der auf der Außenseite eine Lage aus einem thermoplastischen Vlies mit hydrophilem Finish aufweist.

10. Vorrichtung nach einem der Ansprüche 1 bis 9, die einen Vorrat eines Gleitmittels umfasst.

11. Vorrichtung nach einem der Ansprüche 1 bis 10, bei der das Gleitmittel Glycerin oder ein anderes für den oralen Gebrauch geeignetes Gleitmittel ist, wobei vorzugsweise das Gleitmittel hydrophob ist, und/oder das Gleitmittel zur Stoffgruppe der Fette und Wachse gehört.

12. Verfahren zum Herstellen von Schlauchbeuteln aus einer Flachmaterialbahn, bei dem die Flachmaterialbahn fortlaufend zu einem Schlauch geformt wird, sodass die Randbereiche der Flachmaterialbahn einander überdecken, die einander überdeckenden Randbereiche der Flachmaterialbahn durch Erhitzen und Anpressen gegen eine Siegelzone einer Unterlage in Längsrichtung miteinander versiegelt werden, **dadurch gekennzeichnet, dass** die Siegelzone eine Siegelfläche aus Stahl, gehärtetem Stahl, Keramik oder einem anderen abriebfesten Material aufweist und auf die Siegelfläche und/oder den der Siegelfläche zugewandten Randbereich ein Gleitmittel aufgebracht wird.

13. Verfahren nach Anspruch 12, bei dem das Gleitmittel in einer oder mehreren der nachfolgenden Weisen aufgebracht wird:
• das Gleitmittel wird auf den innen angeordneten Randbereich der überlappenden Randbereiche der Flachmaterialbahn aufgebracht,
• das Gleitmittel wird auf den Bereich der Innenseite der Flachmaterialbahn aufgebracht, die in direkten Kontakt mit der Siegelfläche kommt,
• das Gleitmittel wird in Durchlaufrichtung der Flachmaterialbahn vor der Siegelfläche oder auf Höhe der Siegelfläche aufgebracht,
• das Gleitmittel wird auf die Siegelfläche oder einen Bereich der Unterlage aufgebracht, über den die Flachmaterialbahn hinweg verlagert wird, bevor sie in Kontakt mit der Siegelfläche kommt,
• ein Film des Gleitmittels wird auf die jeweilige Auftragsfläche aufgebracht und/oder das Gleitmittel wird auf die jeweilige Auftragsfläche aufgesprüht.

14. Verfahren nach Anspruch 12 oder 13, bei dem die Flachmaterialbahn eine oder mehrere der nachfolgenden Eigenschaften aufweist:
• die Flachmaterialbahn ist eine Bahn aus einem Vliesstoff,
• die Flachmaterialbahn ist eine Bahn aus einem Vliesstoff, der auf der Außenseite eine geringere Hydrophilie als auf der Innenseite aufweist, mit der die Flachmaterialbahn liegt an der Siegelfläche angelegt wird,
• der Vliesstoff weist auf der Innenseite einer Lage aus einem chemisch verfestigten Vliesstoff auf, der einen Anteil Viskosefasern und thermoplastische Fasern enthält und auf der Außenseite eine Lage aus einem Vlies aufweist, das thermoplastische Fasern enthält,
• der Vliesstoff weist auf der Außenseite eine Lage aus einem thermoplastischen Vlies mit hydrophilem Finish auf.

15. Verfahren nach einem der Ansprüche 10 bis 14, bei dem das Gleitmittel Glycerin oder ein anderes, für den oralen Gebrauch geeignetes Gleitmittel ist, wobei vorzugsweise das Gleitmittel hydrophob ist, wobei vorzugsweise das hydrophobe Gleitmittel zur Stoffgruppe der Fette und Wachse gehört.

## Geänderte Patentansprüche

### Geänderte Patentansprüche gemäss Regel 137(2) EPÜ.

1. Vorrichtung zum Herstellen von Schlauchbeuteln aus einer Flachmaterialbahn umfassend eine Formschulter, ein in die Formschulter eingesetztes Formrohr mit einer Siegelzone und eine Einrichtung zum Längssiegeln durch Erhitzen und Anpressen überlappender Randbereiche der von der Formschulter um das Formrohr herumgelegten Flachmaterialbahn gegen die Siegelzone des Formrohrs, wobei die Siegelzone des Formrohres eine Siegelfläche aus Stahl, gehärtetem Stahl, Keramik oder einem anderen abriebfesten Material aufweist, und einen Vorrat einer Flachmaterialbahn, **dadurch gekennzeichnet, dass** die Flachmaterialbahn eine Bahn aus einem Vliesstoff ist und eine Einrichtung zum Auftragen eines Gleitmittels auf die Siegelfläche und/oder den der Siegelfläche zugewandten Randbereich der Bahn aus einem Vliesstoff vorhanden ist.

2. Vorrichtung nach Anspruch 1, bei der die Siegelfläche die Außenseite einer Folie, einer Platte oder einer Schale aus einem abriebfesten Material ist.

3. Vorrichtung nach Anspruch 1 oder 2, bei der die Siegelfläche aus einem elastisch oder plastisch verformbaren Material besteht oder bei der die Siegelfläche auf der Außenseite einer Lage aus einem elastisch oder plastisch verformbaren Material angeordnet ist.

4. Vorrichtung nach Anspruch 3, bei der das verformbare Material ein Elastomer ist und/oder
das verformbare Material ein flexibles Flächengebilde ist.

5. Vorrichtung nach einem der Ansprüche 1 bis 4, bei der die Siegelfläche und/oder das verformbare Material in eine Vertiefung am Außenumfang des Formrohres eingesetzt ist.

6. Vorrichtung nach einem der Ansprüche 1 bis 5, bei der die Einrichtung zum Auftragen des Gleitmittels in einer oder mehreren der nachfolgenden Weisen ausgebildet ist:
• die Einrichtung zum Auftragen des Gleitmittels ist ausgebildet, das Gleitmittel auf den innen angeordneten Randbereich der überlappenden Randbereiche der Flachmaterialbahn aufzubringen,
• die Einrichtung zum Auftragen des Gleitmittels ist ausgebildet, das Gleitmittel auf der Innenseite des Randbereichs der Flachmaterialbahn aufzubringen, die in direkten Kontakt mit der Siegelfläche kommt,
• die Einrichtung zum Auftragen des Gleitmittels ist ausgebildet, das Gleitmittel direkt auf mindestens einen Randbereich der Flachmaterialbahn aufzubringen,
• die Einrichtung zum Auftragen des Gleitmittels ist ausgebildet, das Gleitmittel auf die Formschulter, das Formrohr und/oder die Siegelfläche in einem Bereich aufzubringen, über den die Flachmaterialbahn mit einem Randbereich hinweg verlagert wird,
• die Einrichtung zum Auftragen des Gleitmittels ist ausgebildet, das Gleitmittel mittels eines Filzes oder eines anderen Materials mit Kapillarwirkung auf die jeweilige Auftragsfläche aufzubringen und/oder das Gleitmittel mittels eines Abstreifers auf die jeweilige Auftragsfläche aufzubringen und/oder das Gleitmittel mittels eines Sprühkopfes auf die jeweilige Auftragsfläche aufzubringen.

7. Vorrichtung nach einem der Ansprüche 1 bis 6, bei der die Einrichtung zum Längssiegeln ein Siegelrad umfasst, das eine zum Formrohr senkrechte Drehachse aufweist und auf der Siegelfläche abrollbar ist,
wobei vorzugsweise die Kontaktfläche der Siegelfläche komplementär zum Profil des Siegelrades geformt ist und/oder
die Einrichtung zum Längssiegeln ein beheiztes Siegelrad ist.

8. Vorrichtung nach einem der Ansprüche 1 bis 7, bei der die Flachmaterialbahn in einer oder mehreren der nachfolgenden Weisen ausgebildet ist:
• die Flachmaterialbahn ist eine Bahn aus einem Vliesstoff, der auf der Außenseite eine geringere Hydrophilie als auf der Innenseite aufweist und mit der Innenseite am Formrohr anliegt,
• die Flachmaterialbahn ist eine Bahn aus einem Vliesstoff, der auf der Innenseite eine Lage aus einem chemisch verfestigten Vliesstoff aufweist, der einen Anteil Viskosefasern und thermoplastische Fasern enthält, und der auf der Außenseite eine Lage aus einem Vlies aufweist, das thermoplastische Fasern enthält,
• die Flachmaterialbahn ist eine Bahn aus einem Vliesstoff, der auf der Außenseite eine Lage aus einem thermoplastischen Vlies mit hydrophilem Finish aufweist.

9. Vorrichtung nach einem der Ansprüche 1 bis 8, die einen Vorrat eines Gleitmittels umfasst.

10. Vorrichtung nach einem der Ansprüche 1 bis 9, bei der das Gleitmittel Glycerin oder ein anderes für den oralen Gebrauch geeignetes Gleitmittel ist, wobei vorzugsweise das Gleitmittel hydrophob ist, und/oder das Gleitmittel zur Stoffgruppe der Fette und Wachse gehört.

11. Verfahren zum Herstellen von Schlauchbeuteln aus einer Flachmaterialbahn, bei dem die Flachmaterialbahn fortlaufend zu einem Schlauch geformt wird, sodass die Randbereiche der Flachmaterialbahn einander überdecken, die einander überdeckenden Randbereiche der Flachmaterialbahn durch Erhitzen und Anpressen gegen eine Siegelzone einer Unterlage in Längsrichtung miteinander versiegelt werden, wobei die Siegelzone eine Siegelfläche aus Stahl, gehärtetem Stahl, Keramik oder einem anderen abriebfesten Material aufweist, **dadurch gekennzeichnet, dass** die Flachmaterialbahn eine Bahn aus einem Vliesstoff ist und auf die Siegelfläche und/oder den der Siegelfläche zugewandten Randbereich der Bahn aus einem Vliesstoff ein Gleitmittel aufgebracht wird.

12. Verfahren nach Anspruch 11, bei dem das Gleitmittel in einer oder mehreren der nachfolgenden Weisen aufgebracht wird:
• das Gleitmittel wird auf den innen angeordneten Randbereich der überlappenden Randbereiche der Flachmaterialbahn aufgebracht,
• das Gleitmittel wird auf den Bereich der Innenseite der Flachmaterialbahn aufgebracht, die in direkten Kontakt mit der Siegelfläche kommt,
• das Gleitmittel wird in Durchlaufrichtung der Flachmaterialbahn vor der Siegelfläche oder auf Höhe der Siegelfläche aufgebracht,
• das Gleitmittel wird auf die Siegelfläche oder einen Bereich der Unterlage aufgebracht, über den die Flachmaterialbahn hinweg verlagert wird, bevor sie in Kontakt mit der Siegelfläche kommt,
• ein Film des Gleitmittels wird auf die jeweilige Auftragsfläche aufgebracht und/oder das Gleitmittel wird auf die jeweilige Auftragsfläche aufgesprüht.

13. Verfahren nach Anspruch 11 oder 12, bei dem die Flachmaterialbahn eine oder mehrere der nachfolgenden Eigenschaften aufweist:
• die Flachmaterialbahn ist eine Bahn aus einem Vliesstoff, der auf der Außenseite eine geringere Hydrophilie als auf der Innenseite aufweist, mit der die Flachmaterialbahn liegt an der Siegelfläche angelegt wird,
• der Vliesstoff weist auf der Innenseite einer Lage aus einem chemisch verfestigten Vliesstoff auf, der einen Anteil Viskosefasern und thermoplastische Fasern enthält und auf der Außenseite eine Lage aus einem Vlies aufweist, das thermoplastische Fasern enthält,
• der Vliesstoff weist auf der Außenseite eine Lage aus einem thermoplastischen Vlies mit hydrophilem Finish auf.

14. Verfahren nach einem der Ansprüche 9 bis 13, bei dem das Gleitmittel Glycerin oder ein anderes, für den oralen Gebrauch geeignetes Gleitmittel ist, wobei vorzugsweise das Gleitmittel hydrophob ist, wobei vorzugsweise das hydrophobe Gleitmittel zur Stoffgruppe der Fette und Wachse gehört.
